# EUROPÄISCHE PATENTANMELDUNG

(11) **EP 1 460 501 A1**
(43) Veröffentlichungstag der Anmeldung: **22.09.2004**
(21) Anmeldenummer: 04006171.5
(22) Anmeldetag: 16.03.2004
(51) Int. Cl.: G05B 19/418, G01B 5/04

(54) **Überwachung einer zugeführten Länge eines Materials**

(30) Priorität: 21.03.2003 DE 10312799
(71) Anmelder: Stephan Huber, 75177 Pforzheim (DE)
(72) Erfinder: Stephan Huber, 75177 Pforzheim (DE)
(74) Vertreter: Maser, Jochen, Dipl.-Ing.

(57) **Zusammenfassung**

Die Erfindung betrifft ein Verfahren zur Überwachung der Länge eines zu bearbeitenden Materials (13), welches einer Bearbeitungsstation (18) zugeführt wird und eine Vorrichtung zur Durchführung des Verfahrens bei dem das zu überwachende Material (13) an einem Tastelement (54) entlanggeführt wird, welches eine Messvorrichtung (56) betätigt und der erfasste Wert mit einem voreingestellten Wert in einer Auswerteeinheit verglichen wird.

## Beschreibung

Die Erfindung betrifft ein Verfahren und eine Vorrichtung zum Erfassen einer zugeführten Länge eines Materials in einer Bearbeitungsmaschine.

In der Serienproduktion von beispielsweise zylindrischen Teilen, Stiften, Splinten oder dergleichen ist vorgesehen, dass ein Material von einem Coil abgezogen und einer Bearbeitungsmaschine zugeführt wird, um das zugeführte Material auf eine vorgegebene Länge zuzuschneiden. Dadurch wird ein Werkstück als Endprodukt oder Zwischenprodukt für die Weiterverarbeitung geschaffen.

Die Werkstücklänge der einzelnen zugeschnittenen Teile muss sehr präzise erfolgen. Es werden nur enge Toleranzen akzeptiert. Die Länge des Werkstücks ist zumeist zu kurz, da die Zuführung durch beispielsweise ein Vorschubwerkzeug zumindest kurzzeitig Schlupf aufweisen kann oder dass das vom Coil abgezogene Material mit Öl oder anderen Hilfsstoffen aus den vorherigen Bearbeitungsschritten behaftet ist, so dass die gewünschte Länge für das Werkstück nicht zugeführt wird. Sofern diese Wegdifferenz nicht überwacht und erfasst wird, werden nicht maßhaltige Teile bzw. zu kurze Teile ausgebildet.

Der Erfindung liegt deshalb die Aufgabe zugrunde, ein Verfahren und eine Vorrichtung zur Erfassung einer Länge eines einer Bearbeitungsanlage zugeführten Materials zu schaffen, welche einen außerhalb einer Toleranz liegenden Förderweg erkennt und bei einer Fehlererkennung die Bearbeitungsmaschine stillsetzt oder eine Fortführung der Produktion unter Aussortierung von Schlechtteilen ermöglicht.

Diese Aufgabe wird erfindungsgemäß durch ein Verfahren gemäß dem Anspruch 1 und einer Vorrichtung gemäß dem Anspruch 17 gelöst.

Durch das erfindungsgemäße Verfahren wird die tatsächlich zugeführte Länge eines Materials überwacht, indem eine Zuführstrecke oder ein Vorschub des Materials in Transportrichtung abgefragt wird. Gleichzeitig wird die erfasste Zuführstrecke oder der Vorschub mit einem vorgegebenen Sollwert in einer Auswerteeinheit verglichen. In der Auswerteeinheit wird gleichzeitig bei erfassten Werten, die außerhalb der Toleranz liegen, in Abhängigkeit des gewünschten Programmes entweder die Bearbeitungsmaschine stillgesetzt oder ein Signal ausgegeben, wonach zumindest das zu bearbeitende Werkstück als schlecht aussortiert wird.

Dadurch kann zum einen eine 100 %-Überwachung gegeben sein und zum anderen sichergestellt sein, dass insbesondere bei auftretendem Schlupf während der Zuführung des Materials in eine Bearbeitungsmaschine ein zu kurzes Teil aus dem weiteren Produktionskreislauf entfernt wird.

Bei sehr hochwertig zu verarbeitenden Materialien wird beispielsweise der Betriebsmodus "Stillsetzen des Bearbeitungswerkzeuges" gewählt, um unmittelbar darauf folgend die Anlage zu überprüfen, damit keine weiteren Abweichungen in der zugeführten Länge des Materials auftreten, da die Materialkosten im Vergleich zu Arbeitskosten relativ hoch sind.

Bei der Massenproduktion oder Produktion mit billigem Material wird beispielsweise zumindest das zur Bearbeitung anstehende Material als schlecht aussortiert und die Bearbeitungslinie bleibt des weiteren in Betrieb.

Nach einer weiteren vorteilhaften Ausgestaltung der Erfindung ist vorgesehen, dass nach einer vorwählbaren Anzahl von außerhalb der Toleranz liegenden und erfassten Messwerten die Bearbeitungsmaschine stillgesetzt wird. Insbesondere bei der Massenproduktion wird dieser Wählmodus eingesetzt, so dass nach mehrmaligem Auftreten der Fehler bzw. einer nicht ordnungsgemäßen Zuführung des Materials die Bearbeitungslinie stillgesetzt wird, um die Fehlerursache zu ermitteln. Alternativ kann auch vorgesehen sein, dass anstelle einer vorwählbaren Anzahl von außerhalb der Toleranz liegenden erfassten Messwerten auch ein vorwählbares Zeitintervall als ein Kriterium für eine Abschaltung vorwählbar ist.

Nach dem Erfassen eines außerhalb der Toleranz liegenden und erfassten Messwertes wird bevorzugt eine vorwählbare Anzahl an Werkstücken als Ausschuss aussortiert. Dadurch kann sichergestellt werden, dass ausschließlich Gutteile produziert und einem nachfolgenden Produktionskreislauf zugeführt werden.

Nach einer weiteren vorteilhaften Ausgestaltung der Erfindung ist vorgesehen, dass nach Erkennung eines Fehlers die Messung fortgeführt wird. Zum einen kann festgestellt werden, ob ein dauerhafter Fehler bei der Zuführung des Materials gegeben ist. Zum anderen kann eine Fortführung der Produktion erfolgen. Nachdem ein Gesamtvorschub erfolgt ist, der einer Strecke zwischen Messvorrichtung und Bearbeitungsmaschine entspricht und diese Bauteile innerhalb dieses Vorschubs aussortiert werden, kann die Produktion der Werkstücke aufgenommen werden. Des weiteren kann durch die fortgeführte Messung erzielt werden, dass in der Auswerteeinheit die Anzahl der Teile bzw. deren Länge an Material als Ausschuss oder als Gutteil zur Auswertung von Produktionsdaten erfasst wird.

Das zu überwachende Material wird vorzugsweise unmittelbar entlang des Tastelementes geführt. Dadurch kann eine exakte Erfassung des Vorschubes bzw. des Transportweges des Materials ermöglicht sein.

Nach einer weiteren vorteilhaften Ausgestaltung der Erfindung wird das Tastelement auf einen zu überwachenden Weg eingestellt bzw. einjustiert und zu einer Messvorrichtung positioniert. Dadurch kann eine direkte und unmittelbare Übertragung der zugeführten Länge in Transportrichtung ermittelt und an einer Messvorrichtung bestätigt werden. Die Messgenauigkeit wird hierdurch erhöht.

Nach einer weiteren vorteilhaften Ausgestaltung der Erfindung ist vorgesehen, dass der Vorschub des zu überwachenden Materials diskontinuierlich durchgeführt wird. Die Überwachung des zugeführten Materials ist an einen diskontinuierlichen Arbeitszyklus angepasst. Dadurch können taktweise Zuschnitte von Werkstücken ermöglicht sein. Gleichzeitig könnten weitere Arbeitsschritte wie beispielsweise Richten eines Drahtes in den Stillstandszeiten durchgeführt werden.

An einem Werkzeug, wie beispielsweise einem Vorschubwerkzeug, einem Richtwerkzeug oder Transportwalzen, sind in einer bevorzugten Ausführungsform Sensorelemente vorgesehen, durch welche der Beginn und das Ende der Vorschubbewegung und ein Auslesen der Messwerte erfasst wird. Dadurch kann eine Auswerteeinheit für den Arbeitszyklus aktiviert werden und in der Auswerteeinheit ein Vergleich zwischen dem durch das Tastelement übertragenen und durch die Messvorrichtung erfassten Messwert während des Vorschubes innerhalb eines Arbeitszyklus mit dem frei vorwählbaren Sollwert verglichen werden.

Nach einer weiteren vorteilhaften Ausgestaltung der Erfindung ist vorgesehen, dass die an dem Werkzeug für den Vorschub des Materials angeordneten Sensoren ein Signal direkt oder über eine Steueranlage an das Tastelement weiterleiten. Dadurch wird das Tastelement für die Überwachung zumindest während des Arbeitszyklus aktiviert. In Abhängigkeit der Ausgestaltung des Tastelementes werden durch dieses Signal unterschiedliche Maßnahmen zur Auswertung eingeleitet. Beispielsweise kann das Tastelement durch pneumatischen Druck oder Anlegen einer Spannung oder dergleichen aktiviert werden.

Nach einer bevorzugten Ausführungsform der Erfindung weist das Tastelement zumindest einen Mitnehmer und zumindest eine Fahne auf, welche im nicht aktivierten Zustand drehentkoppelt und im aktivierten Zustand drehfest miteinander verbunden sind. Durch die Aktivierung über das Startsignal für den Beginn eines Arbeitszyklus erfolgt eine Aktivierung des Tastelementes. Vorzugsweise wird ein pneumatisches Ventil in einer Steueranlage betätigt, wodurch über Druckluft eine drehfeste Kopplung zwischen Mitnehmer und Fahne erzielt wird. Alternativ kann die Aktivierung zur drehfesten Kopplung hydraulisch, elektrisch, elektromagnetisch oder taktil erfolgen.

Sofern innerhalb eines Arbeitszyklus die Fahne des Tastelementes ein Signal, vorzugsweise durch Berührung, an einer Messvorrichtung nicht ausgelöst hat, wird in der Auswerteeinheit ein Fehler festgestellt.

Sofern innerhalb des Arbeitszyklus die Fahne an der Messvorrichtung ein Messsignal auslöst bevor das Tastelement am Ende des Arbeitszyklus in den nicht aktiven Zustand übergeführt wird, wird als Messergebnis ein ordnungsgemäßer Vorschub festgestellt.

Das Ende eines Arbeitszyklus wird durch ein Signal über eine Auswerteeinheit an das Tastelement weitergeleitet. Das Tastelement wird bevorzugt durch ein Rückstellelement in einen nicht aktiven Zustand gesetzt.

Die erfindungsgemäße Vorrichtung zum Überwachen einer Länge eines Materials, welches einer Bearbeitungsmaschine zugeführt wird, die insbesondere zur Durchführung des Verfahrens vorgesehen ist, weist den Vorteil auf, dass das Tastelement unmittelbar an einem zu überwachenden Material angreift und eine Übertragung des vollständig zurückgelegten Weges für die Zuführung des Materials an einer Messvorrichtung bestätigt. Durch diese Abtastung des Materials kann eine exakte Erfassung des tatsächlich zurückgelegten Weges des der Bearbeitungsmaschine zugeführten Materials gegeben sein. Somit können Werkstücke mit exakten Längen bzw. auf eine vorbestimmte Länge geschnittene Teile innerhalb einer geforderten Toleranz hergestellt werden.

Das Tastelement ist bevorzugt drehbar angeordnet. Dadurch kann der Bauraum des Tastelementes kompakt gehalten werden, wodurch die Vorrichtung zur Überwachung einer Länge eines zugeführten Materials in einer Vielzahl von Positionen vor dem Bearbeitungswerkzeug positionierbar ist. Die Vorrichtung kann beispielsweise unmittelbar vor dem Bearbeitungswerkzeug als auch unmittelbar nach dem Abziehen des Materials von einem Coil und jeder dazwischen liegenden und möglichen Position angeordnet sein.

Das Tastelement ist nach einer bevorzugten Ausführungsform zweiteilig ausgebildet und weist einen vorzugsweise scheibenförmigen Mitnehmer als erstes Teil und eine Fahne als zweites Teil auf. Der Begriff "Fahne" ist allgemein zu verstehen und nicht auf die in der Zeichnung dargestellte Ausführungsform zur Betätigung der Messvorrichtung beschränkt. Durch den Mitnehmer ist ermöglicht, dass dieser kontinuierlich an dem zuzuführenden Material anliegt, unabhängig von einer Aktivierung der Überwachung. Ein Abnutzen von an dem Mitnehmer entlang rutschendem Material ist nicht gegeben.

Der Mitnehmer ist vorteilhafterweise in seiner stirnseitigen Umfangsfläche an den Querschnitt des zu verarbeitenden und überwachenden Materials angepasst, welches der Bearbeitungsmaschine zugeführt wird. Beispielsweise können runde, ovale als auch eckige oder profilierte Querschnitte vorgesehen sein, welche einer Bearbeitungsmaschine zugeführt werden. Diese Materialien können beispielsweise von einem Coil abgezogen werden oder als Stangenware mehrfach nacheinander der Bearbeitungsmaschine zugeführt werden.

Zwischen dem scheibenförmigen Mitnehmer und einer Fahne ist bevorzugt eine Kupplung ausgebildet oder vorgesehen, welche in einem aktiven Zustand die beiden Teile drehfest zueinander positioniert und in einem nicht aktiven Zustand die Teile frei zueinander drehbar anordnet. Diese Kupplung ist als Reibkupplung vorgesehen, welche durch pneumatischen Druck in eine Eingriffsposition übergeführt ist. Die Kupplung kann alternativ auch weitere Ausführungsformen aufweisen, um einen Mitnahmeeffekt von dem scheibenförmigen Mitnehmer auf die Fahne auszuüben.

Nach einer bevorzugten Ausführungsform ist eine Messvorrichtung durch die Fahne betätigbar. Dadurch wird ein Signal bei einem vorgegebenen erfolgten Vorschubweg ausgelöst und an die Auswerteeinheit weitergeleitet.

Die Vorrichtung erhält in einer bevorzugten Ausführungsform nach Beendigung des Vorschubweges ein Signal von einem den Vorschub überwachenden Sensor. Dadurch wird das Tastelement in einen nicht aktiven Zustand übergeführt. Eine Rückstellung der Fahne in eine voreingestellte Position erfolgt durch ein Rückstellelement, das vorzugsweise als Drehfeder ausgebildet ist.

Eine Messvorrichtung ist bevorzugt tangential im äußeren Schwenkbereich der Fahne in dem Gehäuse vorgesehen. Dadurch kann eine kompakte Anordnung erzielt werden und ein sicheres Auslösen eines Signals durch die Fahne gewährleistet sein. Die Messvorrichtung arbeitet bevorzugt taktil. Die an der Messvorrichtung anliegende Fahne bewirkt eine Eintauchbewegung eines Messkopfes, wodurch ein Signal ausgegeben wird. Auch der Betrag der Eintauchbewegung des Messkopfs in die Messvorrichtung kann erfasst werden.

Nach einer bevorzugten Ausführungsform ist der Mitnehmer austauschbar und in der Größe an den Vorschubweg anpassbar ausgebildet. Da die Fahne einen maximalen freien Weg von ca. 300° aufweist, kann in Abhängigkeit des Durchmessers des Mitnehmers aufgrund des Übersetzungsverhältnisses zwischen Mitnehmer und Fahne eine Anpassung an den Vorschubweg erfolgen, so dass eine maximale Voreinstellung von ca. 300° als Messweg für die Fahne genügt.

Zur Vermeidung eines Schlupfes zwischen dem zuzuführenden Material und dem Mitnehmer ist ein Gegenhalter vorgesehen, welcher bevorzugt federgelagert ist und einen Anpressdruck über das Material zum Mitnehmer hin ausübt.

Der Gegenhalter ist bevorzugt in Analogie zur stirnseitigen Umfangsfläche des Mitnehmers an die Geometrie des zuzuführenden Materials angepasst.

In einer alternativen Ausgestaltung der Vorrichtung ist vorgesehen, dass anstelle eines zwei- oder mehrteiligen Tastelementes, welches über eine Kupplung drehfest in aktivem Zustand verbunden wird, ein Tastelement vorgesehen ist, welches mit einer als Inkrementalgeber ausgebildeten Messvorrichtung gekoppelt ist. Die an dem Inkrementalgeber erfassten Messdaten werden bevorzugt über eine Signalleitung an die Auswerteeinheit abgegeben. Die Auswerteeinheit erfasst vorzugsweise die während eines Arbeitszyklus ermittelten Daten, um eine Überwachung zu ermöglichen.

Weitere vorteilhafte Ausgestaltungen und Weiterbildungen der Erfindung sind in weiteren Ansprüchen angegeben.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Darstellung einer Prozesslinie zur Herstellung von Werkstücken,
- Figur 2: eine schematische Seitenansicht einer erfindungsgemäßen Vorrichtung,
- Figur 3: eine schematische Draufsicht auf die Vorrichtung gemäß Figur 2,
- Figur 4: eine schematische Teilansicht der erfindungsgemäßen Vorrichtung in zwei voreingestellten Positionen,
- Figur 5: eine schematische Seitenansicht von Sensoren zur Überwachung eines Arbeitszyklus,
- Figur 6: eine alternative Ausgestaltung der erfindungsgemäßen Vorrichtung gemäß den Figuren 2 bis 4.

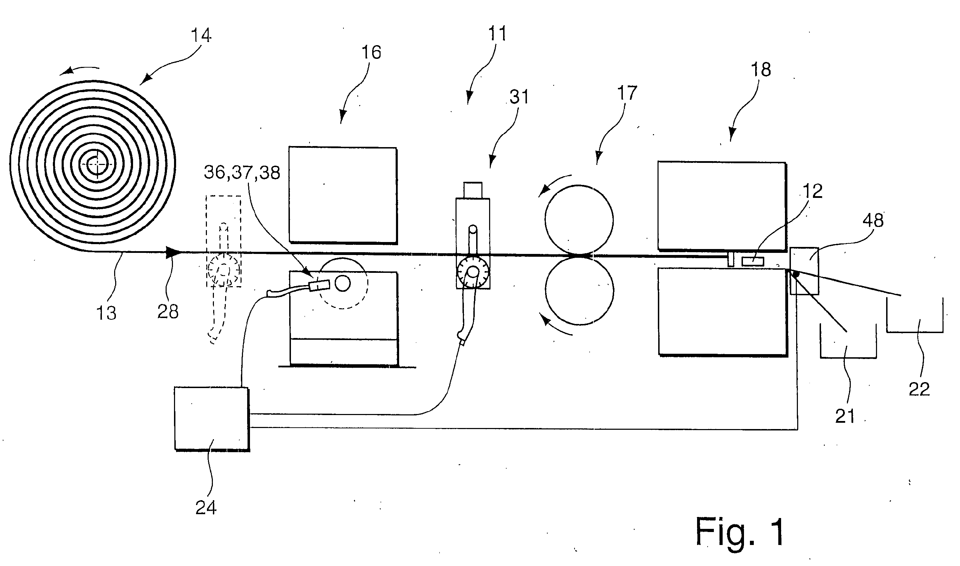

In Fig. 1 ist beispielsweise eine Anlage 11 dargestellt, welche für die Herstellung von Werkstücken 12 vorgesehen ist, die auf eine vorbestimmte Länge zugeschnitten werden. Die Werkstücke 12 können beispielsweise zylindrische Stifte sein, die ein Endprodukt darstellen oder zur Weiterverarbeitung vorgesehen sind. Die Werkstücke 12 können unterschiedliche Querschnittsformen und Größen eines Querschnittes umfassen. Auch profilierte Materialien können mit dieser Anlage 11 verarbeitet werden.

Von einem Coil 14 wird Material 13 abgezogen und einer Station 16, beispielsweise einem Richtwerkzeug, zugeführt. Alternativ zu einem von einem Coil 14 abgezogenen Material 13 kann auch eine Stangenware oder dergleichen vorgesehen sein und der Station 16 zugeführt werden. Das zugeführte Material 13 durchläuft die Station 16 und wird einem Vorschubwerkzeug 17 zugeführt. Dieses Vorschubwerkzeug 17 befördert das Material 13 in eine Bearbeitungsstation 18, welche ein Zuschneiden des Materials 13 auf eine voreingestellte Länge zur Erzeugung des Werkstücks 12 durchführt. Das Werkstück 12 wird aus der Bearbeitungsmaschine 18 herausgeführt und in Behältern 21 und 22 aufgenommen. Der Behälter 21 ist beispielsweise für ordnungsgemäß hergestellte Teile vorgesehen und der Behälter 22 ist für den Ausschuss bestimmt. Das Vorschubwerkzeug 17 kann separat ausgebildet sein und/oder in der Station 16 oder Bearbeitungsstation 18 integriert sein.

Die Anlage 11 wird von eine Regel- und Steuerungsanlage 24 betrieben, welche zumindest eine Auswerteeinheit umfasst.

Die vorliegend beschriebene Anlage 11 ist nur beispielhaft. Eine Anlage 11 kann auch nur aus einer Bearbeitungsmaschine 18 und einer Vorrichtung 31 zur Überwachung der zugeführten Länge eines Materials 13 vorgesehen sein. Weitere Stationen oder alternative Werkzeuge können ebenso ergänzend vorgesehen sein.

Die Anlage 11 umfasst die Vorrichtung 31, durch welche die Länge eines zugeführten Materials 13 in einer Bearbeitungsmaschine 18 überwacht wird. Die Vorrichtung 31 kann gemäß dem Ausführungsbeispiel zwischen der Station 16 und dem Vorschubwerkzeug 17 angeordnet sein. Alternativ kann die Vorrichtung 31 auch in Transportrichtung 28 gesehen vor der Station 16 bzw. unmittelbar beim Zuführen des Materials 13 in eine Anlage 11 vorgesehen sein oder beispielsweise unmittelbar vor der Bearbeitungsstation 18 positioniert sein.

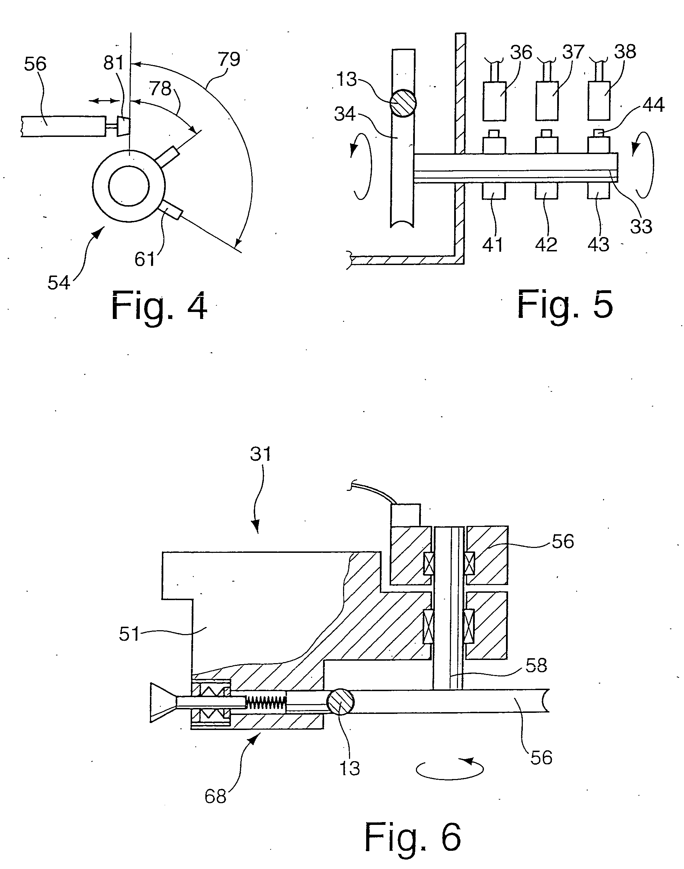

In der Station 16 sind beispielsweise einer Welle 33 (Figur 5), welche ein Antriebsrad 34 zur Vorschubbewegung des Materials 13 aufnimmt, Sensoren 36, 37, 38 zugeordnet, welche jeweils eine Kurvenscheibe 41, 42 und 43 mit frei einstellbaren Nocken 44 überwacht. Diese Sensoren 36, 37 und 38 sind über eine Steuerleitung mit der Steuerungsanlage 24 verbunden. Alternativ kann vorgesehen sein, dass anstelle dieser Anordnung auf der Welle 33 ein Inkrementalgeber oder Hohlwellendrehgeber positioniert ist, welcher beispielsweise mit einer hohen Auflösung von 8.000 Strichen/Umdrehung arbeitet. Dieser Inkrementalgeber arbeitet bevorzugt mit einer Anordnung gemäß Figur 6 zusammen.

Die Vorrichtung 31 erhält von der Anlagensteuerung 24 Signale und gibt auch Signale an diese ab. Des weiteren ist die Steuerungsanlage 24 mit einer Sortierstation 48 verbunden, welche in Abhängigkeit der erfassten und ausgewerteten Daten eine Sortierung der erzeugten Werkstücke 12 für den Behälter 21 oder 22 auswählt.

Eine Vorschubbewegung des Materials 13 erfolgt diskontinuierlich. Die Taktung wird beispielsweise über die Ansteuerung des Vorschubwerkzeuges 17 oder über die Station 16 vorgenommen. Der Beginn eines Arbeitszyklus wird durch den Sensor 36 erfasst. Ein Signal wird an die Steuerungsanlage 24 weitergegeben. Der Sensor 38 ist für die Erkennung des Zyklusendes vorgesehen, welcher ebenfalls ein Signal an die Steuerungsanlage 24 weitergibt. Die Kurvenscheibe 42 beaufschlagt den Sensor 37 während der vorbestimmten Länge für den Vorschub des Materials 13. Dieser Weg wird einmal zusammen mit der Vorrichtung 31 eingestellt.

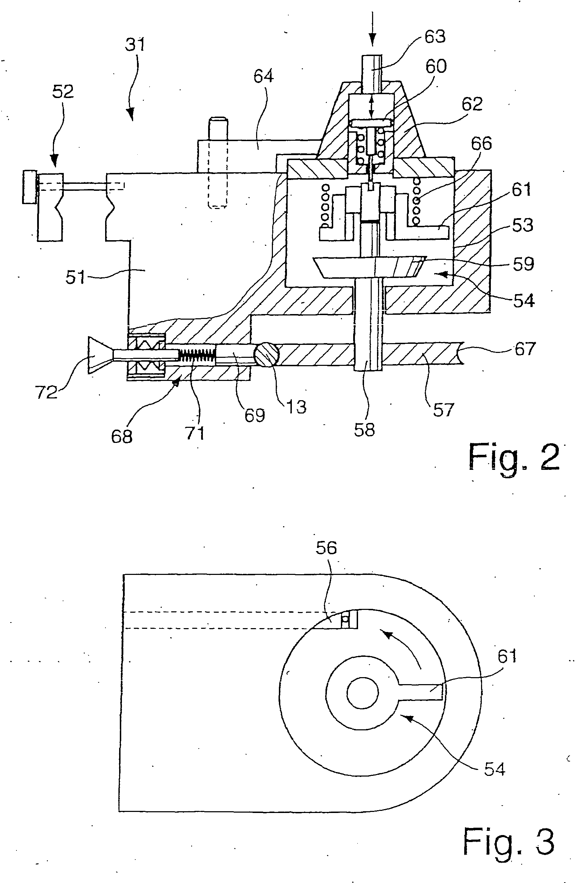

In Figur 2 und 3 ist eine erfindungsgemäße Vorrichtung 31 zur Überwachung des Transportweges für das der Bearbeitungsstation 18 zugeführte Material 13 näher dargestellt. Die Vorrichtung 31 umfasst ein Gehäuse 51, welches über Schnellspannelemente oder Befestigungselemente 52 lösbar an Maschinenteilen der Anlage 11 fixierbar ist. Das Gehäuse 51 weist eine Bohrung 53 auf, in der ein Tastelement 54 und eine Messvorrichtung 56 angeordnet sind. Das Tastelement 54 umfasst einen scheibenförmigen Mitnehmer 57, der über eine Welle 58 mit einer Aufnahme 59 verbunden ist. Auf dieser Aufnahme 59 ist eine Fahne 61 geführt, welche mit einer Einstelleinheit 62 in Verbindung steht. Die Einstelleinheit 62 weist eine Druckluftzuführung 63 auf. Die Einstelleinheit 62 schließt druckdicht ab. Die Einstelleinheit 62 ist über einen Halter 64 zum Gehäuse 51 fixiert. Zwischen der Einstelleinheit 62 und der Fahne 61 ist ein Rückstellelement 66 vorgesehen.

Die Fahne 61 und die Aufnahme 59 sind Teile einer Kupplung. Beim Beaufschlagen eines Stempels 60 mit Druckluft in der Einstelleinheit 62 wird dieser nach unten bewegt, und die Fahne 61 liegt drehfest an der Aufnahme 59 an. In der drehfesten Anordnung ist ein aktiver Zustand der Vorrichtung 31 gegeben. Der nicht aktive Zustand ist in Figur 2 dargestellt.

Der Mitnehmer 67 ist auswechselbar an der Welle 58 angeordnet. Seine stirnseitige Umfangsfläche 67 ist bevorzugt an den Querschnitt des Materials 13 angepasst. Die Umfangsfläche ist bevorzugt aus gehärtetem Material ausgebildet.

Die Vorrichtung 31 ist in ihrer Position zum Material 13 derart vorgesehen, dass eine reibschlüssige Anlage zwischen Material 13 und Mitnehmer 57 gegeben ist. Um einen Schlupf mit Sicherheit zu vermeiden, ist ein Gegenhalter 68 vorgesehen, welcher eine Laufrolle 69 aufnimmt, die ebenfalls bevorzugt eine an den Querschnitt des Materials 13 angepasste stirnseitige Umfangsfläche 67 aufweist. Die Laufrolle 69 wird unter Druck über ein Federelement 71 an den Mitnehmer 57 gedrückt. Zum Einlegen des Materials 13 kann über einen Betätigungsknopf 72 die Laufrolle 69 abgehoben werden.

In Figur 3 ist tangential in die Stufenbohrung 53 eingreifend die Messvorrichtung 56 angeordnet. Diese liegt bevorzugt im äußeren Schwenkbereich der Fahne 61. In Figur 3 ist die Fahne 61 beispielsweise auf eine 3-Uhr-Position voreingestellt. Bei der Messung eines Vorschubweges läuft die Fahne 61 in eine 12-Uhr-Position und betätigt die Messvorrichtung 56, die ein Signal an die Steuerungsanlage 24 weitergibt. Durch die Rückstellfeder 66 wird die Fahne 61 in die voreingestellte Position, im Beispielsfall auf eine 3-Uhr-Position, zurückgesetzt.

In Abhängigkeit des zu überwachenden Weges ist eine Voreinstellung vorgesehen. Bei einem kürzeren Weg kann eine Voreinstellung gemäß Pfeil 78 in Figur 4 gegeben sein. Ein längerer Weg wird über eine größere Auslenkung der Fahne 61 gemäß Pfeil 79 überwacht. Die Messvorrichtung 56 erfasst Signale, sobald diese mit der Fahne 61 an dem Messkopf 81 der Messvorrichtung 56 anschlägt und dieser zumindest geringfügig eintaucht.

In Figur 6 ist eine alternative Ausführungsform der erfindungsgemäßen Vorrichtung dargestellt. Anstelle einer mechanischen Ausführung ist eine elektrische Ausführung vorgesehen. Die Welle 58 ist unmittelbar mit einem Inkrementalgeber 84 verbunden. Dadurch kann eine permanente Abfrage und Überwachung erfolgen, wobei eine Auswertung der erfassten Daten in Abhängigkeit des Arbeitszyklus bevorzugt erfolgt. Anstelle eines Inkrementalgebers 84 können weitere Sensoren eingesetzt werden, welche eine Drehbewegung erfassen und Signale an eine Steuerungsanlage weiterleiten.

Das erfindungsgemäße Verfahren zur Überwachung einer Länge eines Materials 13, welches einer Bearbeitungsmaschine 18 zugeführt wird, ist nachfolgend näher erläutert.

Bei der Einjustierung der Überwachungsvorrichtung 31 wird die Größe des Mitnehmers 57 auf den Vorschubweg abgestimmt. Über die Einstelleinheit 62 wird die Fahne 61 beispielsweise in einer Position gemäß Pfeil 78 in Figur 4 eingestellt. Die eingestellte Gradzahl entspricht einer Länge des Vorschubes. Diese Länge wird an der Kurvenscheibe 42 über Nocken 44 eingestellt, so dass während des Vorschubes über den Sensor 37 ein Signal an die Steuerungsanlage 24 weitergeleitet wird, mit dem Befehl, dass die Messwerte der Vorrichtung 31 ausgelesen werden.

Beim Beginn der Vorschubbewegung bzw. der Transportbewegung in Transportrichtung 28 erfasst der Sensor 36 ein Signal. Dieses Startsignal steuert ein nicht näher dargestelltes Pneumatikventil an, welches die Vorrichtung 31 mit Druckluft beaufschlagt. Die Kupplung greift, so dass ein aktiver Zustand gegeben ist, wodurch der Mitnehmer 57 mit der Fahne 61 verbunden ist. Der Mitnehmer 57 wird über die Vorschubbewegung des Materials 13 angetrieben. Am Ende des Vorschubes erreicht die Fahne 61 den Kopf 81 der Messvorrichtung 56 und betätigt diesen. Gleichzeitig wird ein Signal am Ende des Arbeitszyklus durch den Sensor 38 erfasst, wodurch das Druckluftventil zurückgesetzt wird, so dass sich die Kupplung löst und das Tastelement 54 in einen nicht aktiven Zustand übergeführt ist. Das durch die Messvorrichtung 56 ausgegebene Signal wird in der Auswerteeinheit mit dem voreingestellten Signal verglichen und als Gutteil gewertet, sofern es innerhalb der Toleranz liegt.

Sofern innerhalb des Arbeitszyklus zwischen Start und Stop der Messung eine Betätigung der Messvorrichtung 56 erfolgt, ist der Vorschubweg innerhalb einer vorbestimmten Toleranz erfolgt. Sofern die Messvorrichtung 56 innerhalb des für die Steuerungsanlage 24 aktivierten Zeitraumes eines Arbeitszyklus kein Signal erhält, ist der Vorschub nicht hinreichend erfolgt. Die Anlage 11 wird stillgesetzt und ein Störsignal ausgegeben. Zur Sicherheit werden während des Vorschubs von der Messvorrichtung 56 ebenfalls Informationen an die Steuerungsanlage 24 weitergeleitet und von dieser erfasst um den Arbeitszyklus zu überwachen.

Alternativ zur Stillsetzung der Bearbeitungsmaschine 18 kann die Anlage weiterarbeiten, wobei ein Signal an eine Sortierstation 48 ausgegeben wird, die das Werkstück 12 als Ausschuss in den Behälter 22 überführt. Ein nächster Arbeitszyklus wird gestartet und erneut eine Messung durchgeführt. Zumindest dieses erzeugte Werkstück wird zur Sicherheit nochmals als Ausschuss aussortiert. Ist bei diesem nachfolgenden Arbeitszyklus der Vorschub innerhalb der Toleranz erfolgt, wird die Anzahl der Werkstücke 12, welche in der Länge dem Abstand zwischen der Vorrichtung 31 und der Bearbeitungsmaschine 18 entsprechen, aussortiert und mit dem darauffolgenden Arbeitsschritt die Herstellung von weiteren Werkstücken 12 fortgesetzt. Alternativ kann auch eine vorwählbare größere Anzahl von Werkstücken 12 zur Sicherheit nach einem auftretenden Fehler aussortiert werden.

In der Steuerungsanlage 24 ist eine Auswerteeinheit enthalten, welche die erfassten Daten aufnimmt und verarbeitet. Dabei werden insbesondere die innerhalb eines Arbeitszyklus erfassten Daten mit vorgegebenen Einstellungen verglichen, um ein Signal für ein Gut- oder Schlechtteil auszugeben und zumindest ein Störsignal auszugeben oder die Sortiereinheit 48 anzusteuern.

In der Steuerungsanlage 24 sind bevorzugt drei pneumatische Ventile vorgesehen, welche mit den Sensoren 36, 37 und 38 gekoppelt sind. Des weiteren weist die Steuerungsanlage 24 einen Logikprozessor und eine Auswerteeinheit aus. Sämtliche Bauteile sind als Plug-in-Version vorgesehen, so dass diese schnell austauschbar und einfach einzusetzen und in Betrieb zu nehmen sind. Über eine an die Steuerungsanlage 24 anschließbare oder darin enthaltene Datenverarbeitungsanlage können unterschiedliche Auswertungen durchgeführt werden.

## Patentansprüche

1. Verfahren zur Überwachung der Länge eines zu bearbeitenden Materials (13), welches einer Bearbeitungsstation (18) zugeführt wird, bei dem das zu überwachende Material (13) an einem Tastelement (54) entlanggeführt wird, bei dem der Weg des Tastelementes (54) von einer Messvorrichtung (56) erfasst wird, bei dem in einer Auswerteeinheit der erfasste Wert mit einem voreingestellten Wert verglichen wird und bei einem außerhalb einer Toleranz liegenden erfassten Wert das Bearbeitungswerkzeug stillgesetzt oder zumindest das bearbeitete Werkstück (12) aussortiert wird.

2. Verfahren nach Anspruch 1, **dadurch gekennzeichnet, dass** nach einer vorwählbaren Anzahl oder einem vorwählbaren Zeitintervall von außerhalb der Toleranz liegenden erfassten Messwerten die Bearbeitungsmaschine (18) stillgesetzt wird.

3. Verfahren nach einem der vorhergehenden Ansprüche, **dadurch gekennzeichnet, dass** nach dem Erfassen eines außerhalb der Toleranz liegenden Messwertes eine vorbestimmte Anzahl an Werkstücken (12) als Ausschuss aussortiert werden.

4. Verfahren nach einem der vorhergehenden Ansprüche, **dadurch gekennzeichnet, dass** nach dem Erfassen eines außerhalb der Toleranz liegenden Messwertes weitere Messungen fortgeführt werden.

5. Verfahren nach einem der vorhergehenden Ansprüche, **dadurch gekennzeichnet, dass** das zu überwachende Material unmittelbar unter Reibschluss entlang eines Tastelementes (54) geführt wird und vorzugsweise auf eine zu überwachende Wegstrecke eingestellt und zu einer Messvorrichtung (56) positioniert wird.

6. Verfahren nach einem der vorhergehenden Ansprüche, **dadurch gekennzeichnet, dass** der Vorschub von der eingestellten Länge des Materials (13) diskontinuierlich durchgeführt wird.

7. Verfahren nach einem der vorhergehenden Ansprüche, **dadurch gekennzeichnet, dass** an einem das Material (13) transportierenden Werkzeug Sensoren (36, 38) oder zumindest ein Inkrementalgeber vorgesehen sind, durch welche der Beginn und das Ende eines Arbeitszyklus für die Vorschubbewegung und ein Signal an eine Auswerteeinheit zum Auslesen der Messwerte erfasst wird und vorzugsweise gleichzeitig mit Erkennung des Beginns eines Arbeitszyklus ein Signal an eine Vorrichtung (31) ausgegeben wird, durch welches das Tastelement (54) und die Messvorrichtung (56) aktiviert wird.

8. Verfahren nach einem der vorhergehenden Ansprüche, **dadurch gekennzeichnet, dass** durch die Vorschubbewegung das Tastelement (54) bewegt und nach einem vollständig erfolgten Vorschub eine Messvorrichtung (56) durch das Tastelement (54) betätigt wird.

9. Verfahren nach einem der vorhergehenden Ansprüche, **dadurch gekennzeichnet, dass** das Tastelement (54) aus zumindest einem Mitnehmer (57) und zumindest einer Fahne (61) ausgebildet ist, welche in einem nicht aktivierten Zustand drehentkoppelt angeordnet sind und in einem aktiven Zustand während eines Arbeitszyklus drehfest miteinander verbunden werden und vorzugsweise durch ein Signal einer Steuerungsanlage (24) aktiviert und pneumatisch, hydraulisch, elektrisch, elektromagnetisch oder taktil betätigt und in den aktiven Zustand übergeführt wird.

10. Verfahren nach einem der vorhergehenden Ansprüche, **dadurch gekennzeichnet, dass** eine Sortiereinheit (48) durch ein Ausgabesignal der Steuerungsanlage (24) angesteuert wird.

11. Verfahren nach einem der vorhergehenden Ansprüche, **dadurch gekennzeichnet, dass** durch eine Berührung der Fahne (61) des Tastelements (54) an der Messvorrichtung (56) ein Messsignal ausgelöst und an die Auswerteeinheit weitergeleitet wird und vorzugsweise während des Arbeitszyklus die Messvorrichtung (56) innerhalb kurzer Zeitintervalle, insbesondere kontinuierlich auf Signale abgefragt wird und ohne Detektion eines Signals der Messvorrichtung (56) eine Fehlermeldung ausgegeben wird.

12. Verfahren nach einem der vorhergehenden Ansprüche, **dadurch gekennzeichnet, dass** nach dem Ende eines Arbeitszyklus die Vorrichtung (31) deaktiviert und die Fahne (61) durch eine Rückstellfeder in eine voreingestellte Position für eine nachfolgende Überwachung zurückgesetzt wird.

13. Vorrichtung zum Überwachen einer Länge eines Materials (13), welches einer Bearbeitungsmaschine zugeführt wird, insbesondere zur Durchführung des Verfahrens nach einem der vorhergehenden Ansprüche mit einem Gehäuse (51), mit einem an dem Gehäuse (51) angeordneten Tastelement (54), welches an einem Material (13) zur Messung des Vorschubs angreift und mit einer in oder an dem Gehäuse (51) angeordneten Messvorrichtung (56), die durch ein Tastelement (54) betätigbar ist.

14. Vorrichtung nach Anspruch 13, **dadurch gekennzeichnet, dass** das Tastelement (54) drehbar angeordnet ist.

15. Vorrichtung nach Anspruch 13 oder 14, **dadurch gekennzeichnet, dass** das Tastelement (54) zumindest zweiteilig ausgebildet ist und einen vorzugsweise scheibenförmigen Mitnehmer (57) und eine Fahne (61) umfasst.

16. Vorrichtung nach einem der Ansprüche 13 bis 15, **dadurch gekennzeichnet, dass** der Mitnehmer (57) eine stirnseitige Umfangsfläche (67) aufweist, welche eine an den Querschnitt des zu überwachenden Materials (13) ausgebildete Angriffsfläche aufweist und vorzugsweise der Mitnehmer (57) austauschbar und in der Größe an den Vorschubweg anpassbar ist.

17. Vorrichtung nach einem der Ansprüche 13 bis 16, **dadurch gekennzeichnet, dass** der zumindest eine Mitnehmer (57) und die zumindest eine Fahne (61) im nicht aktivierten Zustand frei drehbar zueinander angeordnet sind und im aktivierten Zustand drehfest verbunden sind und vorzugsweise zur drehfesten Anordnung von Mitnehmer (57) und Fahne (61) des Tastelementes (54) eine Kupplung vorgesehen ist, welche elektrisch, pneumatisch, hydraulisch, elektrisch, elektromagnetisch oder mechanisch betätigbar ist.

18. Vorrichtung nach einem der Ansprüche 13 bis 17, **dadurch gekennzeichnet, dass** die Messvorrichtung (56) durch die Fahne (61) des Tastelements (54) betätigbar ist und vorzugsweise auf die zu überwachende Messstrecke durch eine Voreinstellung einstellbar ist.

19. Vorrichtung nach einem der Ansprüche 13 bis 18, **dadurch gekennzeichnet, dass** die Messvorrichtung (56) tangential in einem äußeren Schwenkbereich der Fahne (61) im Gehäuse (51) vorgesehen ist und vorzugsweise an der Fahne (61) ein Rückstellelement (66), insbesondere eine Rückstellfeder, vorgesehen ist.

20. Vorrichtung nach einem der Ansprüche 13 bis 19, **dadurch gekennzeichnet, dass** zwischen der Fahne (61) und dem Mitnehmer (57) ein reibschlüssiger Belag vorgesehen ist.

21. Vorrichtung nach einem der Ansprüche 13 bis 20, **dadurch gekennzeichnet, dass** dem Mitnehmer (57) ein Gegenhalter (68) zugeordnet ist, welcher das zu überwachende Material (13) zum Mitnehmer (57) unter Druck positioniert, und vorzugsweise der Gegenhalter (68) in seiner Geometrie der Umfangsfläche an das zu überwachende Material (13) anpassbar ist.

22. Vorrichtung nach Anspruch 21, **dadurch gekennzeichnet, dass** der Mitnehmer (57) und der Gegenhalter (68) eine gehärtete Umfangsfläche aufweisen.

23. Vorrichtung nach Anspruch 13, **dadurch gekennzeichnet, dass** die Messvorrichtung (56) als Inkrementalgeber ausgebildet ist und mit dem Tastelement (54) drehfest verbunden ist.

24. Vorrichtung nach einem der Ansprüche 13 bis 23, **dadurch gekennzeichnet, dass** eine Länge des Materials innerhalb einer Toleranz von weniger als 40µm erfassbar ist.
